# DEMANDE DE BREVET EUROPEEN

(11) **EP 0 876 037 A2**
(43) Date de publication de la demande: **04.11.1998**
(21) Numéro de dépôt: 98201194.2
(22) Date de dépôt: 15.04.1998
(51) Int. Cl.: H04M 1/274, H04M 1/72, H04Q 7/32, H04M 3/48

(54) **Terminal, procédé de rappel automatique et système de télécommunications**

(30) Priorité: 30.04.1997 FR 9705382
(71) Demandeur: Koninklijke Philips Electronics N.V., 5621 BA Eindhoven (NL)
(72) Inventeur: Henon, Alexandre, 75008 Paris (FR); Thauvin, Philippe, 75008 Paris (FR)
(74) Mandataire: Chaffraix, Jean

(57) **Abrégé**

L'invention fournit des moyens (40, 41, 42) pour intégrer une fonction de rappel automatique dans un terminal (31, 32, 33, 34, 35) d'un réseau de télécommunications (10, 12, 13, 15) muni d'un protocole de transfert de données fonctionnant en mode bi-directionnel simultané. La fonction de rappel automatique est réalisée par un dispositif (44, 45, 46) intégré dans un terminal dit local muni d'une commande (33) destinée à être actionnée après l'échec d'une tentative de connexion à un terminal dit distant, pour réitérer automatiquement la tentative jusqu'à l'établissement de la connexion dans la limite d'un nombre d'itérations prédéfini.

Applications : téléphonie fixe et mobile, téléphonie et visioconférence sur Internet, etc.

## Description

L'invention concerne un terminal local relié à un réseau de télécommunications pour communiquer en mode connecté bi-directionnel simultané avec au moins un terminal distant.

L'invention concerne également un procédé de rappel automatique mis en oeuvre par un terminal local après l'échec d'une tentative de connexion à un terminal distant, les terminaux étant reliés à un réseau de télécommunications et identifiés respectivement sur le réseau par une adresse et/ou un numéro de connexion.

L'invention concerne enfin un système de télécommunications comportant au moins un terminal dit local et un terminal dit distant susceptibles de communiquer en mode connecté bi-directionnel simultané.

Un procédé d'exécution d'une demande de rappel dans un central téléphonique privé commandé par programme enregistré est connu de la demande de brevet PCT numéro WO 95/20858 de priorité allemande. Ce document décrit la mise en oeuvre d'un procédé de rappel automatique accessible aux communications entre un abonné interne au réseau privé et un abonné externe, à partir d'un central téléphonique qui dispose déjà de cette fonction pour les communications internes.

Ce procédé n'est réalisable que depuis un terminal relié à un central téléphonique doté de la fonction souhaitée. Il n'est pas applicable depuis un poste terminal relié à un réseau public qui n'offre pas cette fonction.

Un objet de l'invention est donc de proposer des moyens pour fournir une fonction de rappel automatique intégrée dans un terminal d'un réseau de télécommunications, muni d'un protocole de transfert de données fonctionnant en mode bi-directionnel simultané.

Pour cela, un terminal tel que mentionné dans le préambule est caractérisé en ce qu'il comporte un dispositif de rappel automatique intégré muni d'une commande locale destinée à être actionnée après l'échec d'une tentative de connexion au terminal distant, pour réitérer automatiquement la tentative jusqu'à l'établissement de ladite connexion dans la limite d'un nombre d'itérations prédéfini.

De même, un procédé tel que mentionné est caractérisé en ce qu'il comporte les étapes suivantes :
- stockage de l'adresse et/ou du numéro du terminal distant,
- réalisation d'une boucle finie d'itération de ladite tentative de connexion vers l'adresse et/ou le numéro stockés,
- détection d'un résultat positif si une connexion a pu être établie, négatif sinon,
- si le résultat est positif, transmission de signaux de connexion pour informer chaque terminal de l'établissement de la connexion,
- si le résultat est négatif, transmission d'un signal de résultat pour informer le terminal local de l'échec de la connexion.

Enfin, un système tel que mentionné est caractérisé en ce que le terminal local comporte un dispositif de rappel automatique intégré muni d'une commande locale actionnée après l'échec d'une tentative de connexion au terminal distant, pour réitérer automatiquement la tentative, jusqu'à l'établissement de la connexion dans la limite d'un nombre d'itérations prédéfini.

Dans un mode de réalisation particulièrement avantageux appliqué à la téléphonie mobile, l'invention permet de réduire considérablement le nombre d'appels infructueux vers un terminal mobile distant. En effet, dans certaines régions où l'infrastructure radio ne permet pas d'écouler le trafic correctement, notamment à Singapour, le taux d'échec du premier appel est proche de 100%.

L'invention prévoit un terminal mobile doté d'une fonction de rappel automatique destinée à améliorer le rendement des tentatives de connexion à un terminal mobile distant, via un réseau de téléphonie mobile.

Ainsi, selon une caractéristique importante de l'invention, un terminal, un procédé et un système tels que définis respectivement ci-dessus, sont prévus pour fonctionner selon une norme de téléphonie mobile du type GSM (de l'anglais Global System for Mobile communications) et en particulier conformément à une recommandation du type ETS 300 505, annexe A, datée de janvier 1996, de l'ETSI (de l'anglais European Telecommunications Standards Institute), concernant des restrictions d'appels répétés automatiquement.

La description suivante, faite en regard des dessins ci-annexés, le tout donné à titre d'exemple non limitatif fera bien comprendre comment l'invention peut être réalisée.

La figure 1 représente un réseau de téléphonie mobile comportant un terminal local et un terminal distant selon un premier mode de réalisation de l'invention.

La figure 2 est un schéma bloc d'un circuit du terminal local 12 représenté à la figure 1.

La figure 3 est un organigramme décrivant le fonctionnement du procédé de rappel automatique selon l'invention.

La figure 4 représente un téléphone analogique selon un deuxième mode de réalisation de l'invention.

La figure 5 est un organigramme décrivant le fonctionnement du procédé mis en oeuvre dans le téléphone représenté à la figure 4.

La figure 6 représente un exemple de système de télécommunications selon un troisième mode de réalisation de l'invention.

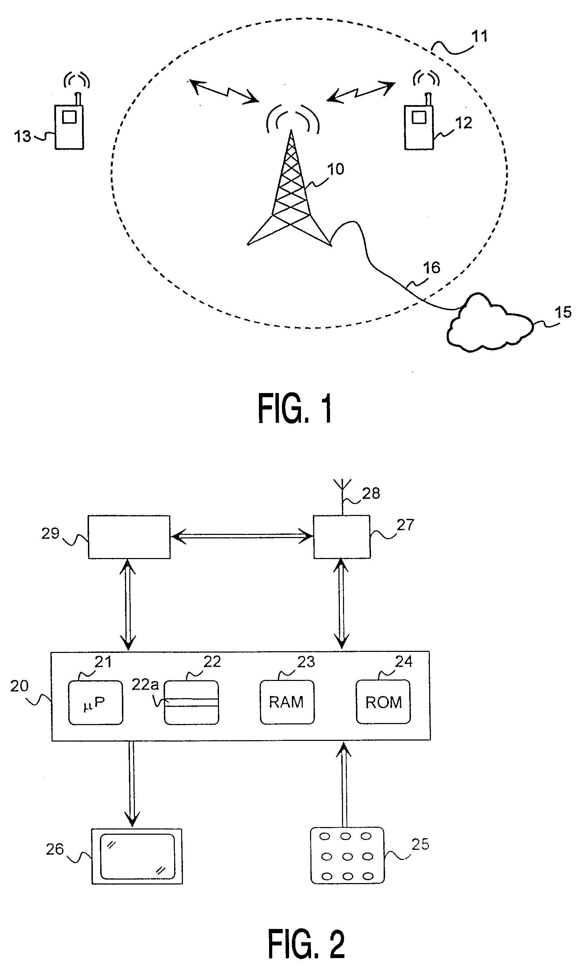

Le mode de réalisation illustré aux figures 1 et 2 s'applique notamment à un système de téléphonie cellulaire numérique du type GSM, conforme à la recommandation ETS 300 505 de l'ETSI.

Le schéma de la figure 1 représente un réseau de télécommunications simplifié comportant une unique station radio de base 10 ayant une zone de couverture 11 à l'intérieur de laquelle des terminaux mobiles 12 et 13 peuvent se déplacer tout en étant en liaison radio avec la station de base 10, reliée au réseau téléphonique commuté public 15 par un câble 16. Dans l'exemple illustré, la zone de couverture du réseau GSM se confond avec la zone 11 puisque le réseau ne comporte qu'une seule station de base 10. Sur la figure, le terminal 13, dit terminal distant, est situé hors de la zone de couverture 11 du réseau GSM et se trouve donc hors de portée du terminal 12, dit terminal local. Lorsque, pour entrer en communication avec le terminal 13, le terminal 12 effectue une première tentative de connexion, celle-ci échoue puisque le terminal 13 se trouve hors de la zone de couverture 11 du réseau.

Selon l'invention, le terminal 12 actionne alors un dispositif de rappel automatique pour réitérer un certain nombre de fois (10 fois maximum selon la recommandation ETS 300 505, annexe A) sa tentative jusqu'à ce que le terminal 13 soit revenu dans la zone de couverture 11 et soit en mesure de recevoir son appel. L'annexe A de la recommandation ETS 300 505 réglemente en effet les rappels automatiques émis depuis un terminal relié à un réseau de type GSM ou depuis un périphérique relié au terminal. Le nombre de rappels autorisés est limité, cette limite variant selon la cause de l'échec de la première tentative de connexion.

Dès que le dispositif de rappel automatique du terminal 12 détecte l'établissement de la connexion, le mobile 13 étant par exemple revenu dans la zone de couverture 11, le dispositif de rappel déclenche un signal de connexion sur le terminal local 12 pour informer l'utilisateur que son interlocuteur distant (muni du terminal 13) est en ligne. Parallèlement, le terminal 12 transmet au terminal distant 13 un signal pour inviter éventuellement l'abonné distant à patienter le temps que l'abonné local "décroche" à son tour. Ces signaux d'information peuvent être sonores, visuels ou sensoriels, les radiotéléphones 12 et 13 étant généralement dotés d'un microphone, d'un écran et/ou d'un vibreur.

Un circuit du terminal 12 réalisant l'invention est représenté à la figure 2. L'organe de commande 20 comporte :
- un processeur de données 21 (µC),
- une mémoire morte programmable électriquement effaçable 22 de type EEPROM (de l'anglais Electrically Erasable Programmable Read Only Memory) dans laquelle est stocké notamment le numéro de téléphone du terminal 13 à rappeler,
- une mémoire volatile 23 de type RAM (de l'anglais Random Access Memory) et
- une mémoire non volatile 24 de type ROM (de l'anglais Read Only Memory) pour stocker le programme principal de fonctionnement de l'appareil.

L'organe de commande 20 reçoit également des signaux du clavier 25 et gère l'affichage de l'écran 26 du radiotéléphone. Il contrôle enfin un circuit d'émission/réception 27 couplé à une antenne 28 pour échanger des signaux radioélectriques avec la station de base 10. Ces signaux sont traités par un synthétiseur 29 dont une sortie est directement connectée au processeur de données 21 qui les transforme en trames de données selon un protocole défini par la norme GSM.

Lorsqu'une connexion est établie entre les terminaux 12 et 13, à la demande du terminal 12, le processeur 21 du terminal local 12 reçoit dans une trame de signalisation, un message d'acquittement de connexion de la part du terminal 13. Le processeur 21 déclenche alors le traitement adéquat pour informer les deux parties 12 et 13 que la connexion est établie.

En général, le laps de temps ou temps d'attente entre deux rappels automatiques successifs dépend de la cause du premier échec ou du nombre de rappels déjà effectués. Selon une variante de ce premier mode de réalisation, ce temps d'attente peut également être choisi par l'utilisateur en fonction de critères personnels liés notamment à l'identité de l'abonné appelé. Dans ce cas, on peut prévoir au menu du téléphone 12, une fonction complexe de rappel automatique supportant des paramètres réglables par l'utilisateur pour fixer le temps d'attente entre deux rappels en fonction de différents critères, comme par exemple le jour de la semaine ou le numéro appelé. Une liste de rappel 22a contenant plusieurs numéros à rappeler peut être stockée dans la mémoire 22. Le processeur 21 prend alors en charge la gestion de la liste de rappel 22a pour permettre à l'utilisateur d'effectuer des rappels automatiques très espacés dans le temps sans bloquer l'utilisation du téléphone pour d'autres appels.

La possibilité de modifier le temps d'attente entre deux rappels successifs augmente l'ergonomie du téléphone. Cette fonction s'avère très utile pour joindre un abonné voyageur susceptible de rencontrer des zones d'ombre ou d'interdire volontairement à son appareil de recevoir des appels dans les pays où la réception d'appels est payante.

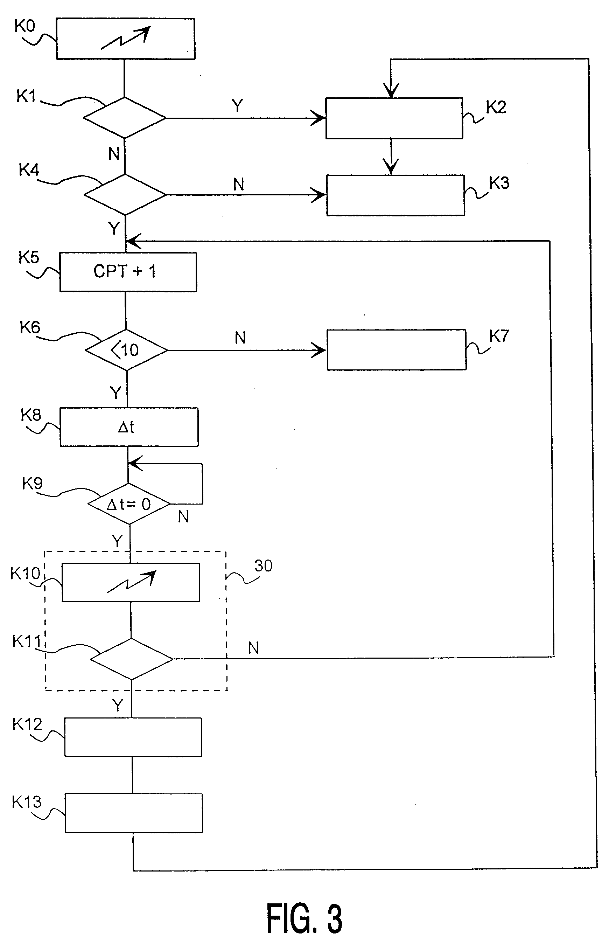

Le procédé de rappel automatique selon l'invention va être maintenant décrit en suivant les étapes K0 à K12 sur la figure 3.

A la case K0, le processeur local lance une première tentative de connexion sur une commande de l'utilisateur local. A la case K1, le processeur teste le résultat de la tentative en surveillant la réception d'un acquittement de connexion de la part du terminal appelé. Si le résultat du test est positif (Y), le procédé continue à la case K2, sinon (N) on passe directement à la case K4. A la case K2, l'acquittement de connexion a été reçu, l'appel a donc abouti et les deux terminaux peuvent communiquer jusqu'à ce que l'un d'eux se déconnecte et provoque le passage à la case K3 où au moins le terminal local est au repos.

A la case K4, la tentative de connexion ayant échoué, le processeur local vérifie que la fonction de rappel automatique est sélectionnée. Si c'est le cas (Y) le procédé continue à la case K5, sinon (N) il se termine à la case K3.

A la case K5, un compteur CPT est incrémenté d'une unité (CPT + 1) pour indiquer une itération de tentative de connexion. A la case K6, la valeur de ce compteur est testée (CPT < 10) pour vérifier que le nombre maximum d'itérations autorisées par la norme n'est pas atteint. Si le test (CPT < 10) est négatif (N), le procédé se termine à la case K7 où un signal d'échec de connexion est émis localement à l'utilisateur du téléphone. Si le test (CPT < 10) est positif (Y), le procédé continue à la case K8 où une temporisation Δt est lancée pour attendre un certain temps avant d'effectuer une nouvelle tentative de connexion. Ce temps d'attente dépend entre autres des normes utilisées. A la case K9, on teste le signe de cette temporisation pour détecter son échéance.

On passe alors à la case K10 pour procéder à une nouvelle tentative de connexion. Le processeur surveille la détection d'un signâl de "décrochage" de l'abonné appelé. A la case K11, le résultat de la tentative est testé. Il est positif si le "décrochage" est détecté, négatif sinon.

Les détails d'exécution des étapes K10 et K11 (représentées dans le cadre 30) varient selon le mode de réalisation choisi. En effet, la détection du "décrochage" de l'abonné appelé est réalisée différemment sur un réseau téléphonique à accès analogique et sur un réseau numérique à transfert de paquets.

Si le résultat de l'étape K11 est négatif (N), le procédé reprend à partir de la case K5. Si le résultat est positif (Y), la connexion est établie entre les deux terminaux et le procédé se poursuit à la case K12 avec l'émission d'un signal au niveau du terminal local pour informer l'abonné appelant que la connexion est établie (l'abonné appelé a décroché) puis à la case K13 avec l'émission d'un signal au niveau du terminal distant pour inviter l'abonné appelé à patienter le temps que son interlocuteur (l'abonné appelant) décroche à son tour. Les étapes K12 et K13 peuvent être effectuées dans un ordre quelconque ou même simultanément. Ensuite, la communication se déroule normalement à la case K2 pour se terminer à la case K3.

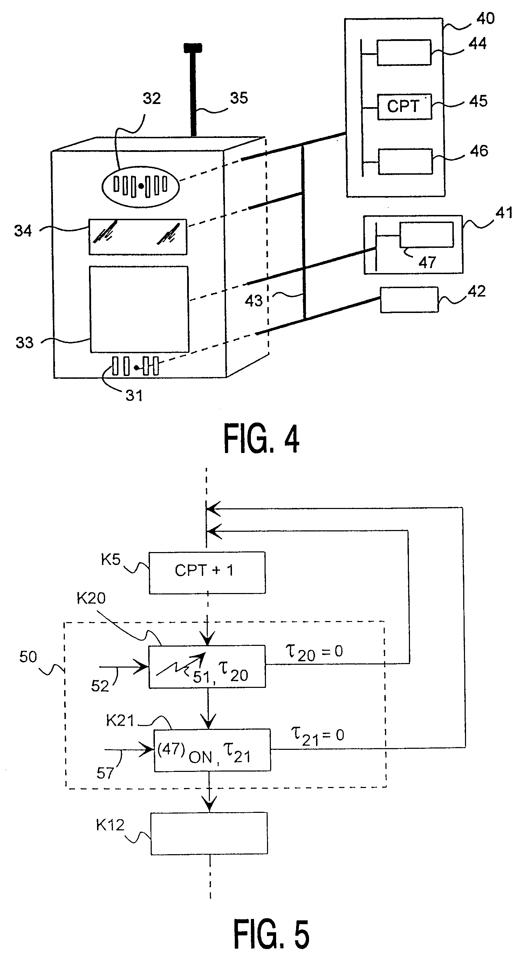

On a représenté sur la figure 4 un exemple de terminal téléphonique selon un deuxième mode de réalisation de l'invention. Il s'agit d'un appareil mobile analogique doté d'un microphone 31, d'un haut-parleur/écouteur 32, d'un clavier 33, d'un écran 34 et d'une antenne 35. Cet appareil est de plus doté d'un microcontrôleur 40 et de deux processeurs audio 41 et 42 qui sont reliés par un bus 43. Le microcontrôleur 40 comporte notamment un contrôleur proprement dit 44, une mémoire vive 45 et une mémoire morte 46.

A titre d'exemple, pour un téléphone mobile analogique fonctionnant conformément à la norme ETACS (de l'anglais Extended Total Access Communications System) ou à la norme AMPS (de l'anglais Advanced Mobile Phone Service), on utilise respectivement pour les processeurs 41, 42 et pour le microcontrôleur 40, les processeurs audio SA5752, SA5753 et le microcontrôleur 8051 fabriqués par Philips Semiconductors.

Le processeur audio SA5752 est notamment doté d'un détecteur d'activité vocale 47 qui délivre sur l'une des sortie du processeur audio 41 un signal indiquant la présence ou l'absence de voix dans un signal analogique. C'est ce détecteur d'activité vocale 47 qui est utilisé pour différencier la voix de la signalisation afin de détecter le décrochage de l'abonné appelé. Ce mode de réalisation est particulièrement avantageux puisqu'il tire partie de la présence du processeur SA5752 dans de nombreux téléphones de ce type.

La mémoire volatile 45 contient notamment un compteur CPT destiné à compter le nombre de tentatives de connexions effectuées à l'aide du dispositif de rappel automatique. Quant à la mémoire morte 46, elle contient des instructions de commande du microcontrôleur 40.

Dans ce mode de réalisation, l'appareil téléphonique selon l'invention comporte ainsi des moyens de détection du décrochage de l'appelé, lors de l'établissement d'une communication entre un appelant et un appelé. Ces moyens sont utilisés pour déclencher l'émission des messages d'information destinés aux deux terminaux connectés, lorsque le décrochage a été détecté.

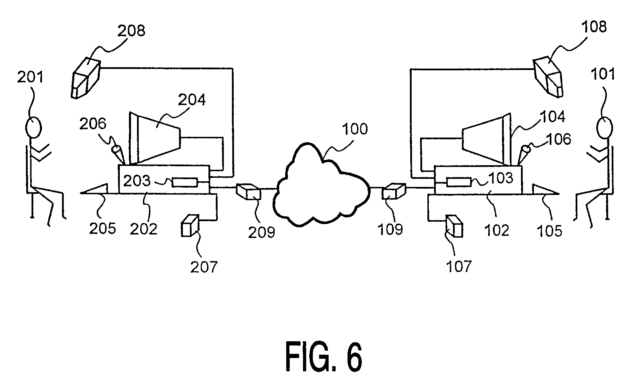

Les instructions relatives à ce deuxième mode de réalisation, sont résumées sur le schéma de la figure 5 où les étapes K20 et K21 (dans le cadre 50) se substituent aux étapes K10 et K11 représentées à la figure 3 dans le cadre 30.

A la case K20, le mobile analogique émet vers sa station radio de base, dans un canal réservé au service, une requête 51 en vue d'obtenir un canal voix sur lequel il communiquera avec l'appelé par modulation de fréquence. Le mobile est alors en attente (jusqu'à l'échéance d'une temporisation τ₂₀) de l'attribution 52 dudit canal voix. Si ce canal ne lui est pas attribué avant l'échéance de la temporisation τ₂₀, (symbolisée par la flèche qui porte la légende τ₂₀ = 0), le procédé reprend à la case K5 de la figure 3.

Si le canal voix lui est attribué avant l'échéance de cette temporisation, le fonctionnement se poursuit à la case K21. Le détecteur d'activité vocale 47 du processeur SA5752 est activé (ce qui est symbolisé par la légende (47)_{ON}) en même temps qu'une temporisation τ₂₁ est lancée. Le processeur dêlivre en sortie un signal indiquant l'absence ou la présence de voix sur le canal voix. L'observation de ce signal de sortie permet donc de détecter le décrochage de l'appelé. Le mobile reste alors en attente jusqu'à ce que l'un des événements suivants se produise : le processeur SA5752 détecte la présence de voix sur le canal voix (cet événement est symbolisé par la flèche 57) ou bien la temporisation τ₂₁ arrive à échéance (cet événement est symbolisé par la flèche qui porte la légende τ₂₁ = 0). Si l'événement 57 ne s'est pas produit avant l'échéance de la temporisation (τ₂₁ = 0), le procédé reprend à la case K5.

Si l'événement 57 se produit avant l'échéance de la temporisation τ₂₁, le procédé se poursuit à la case K12 de la figure 3.

Le système représenté à la figure 6 comporte, conformément à l'invention : un terminal local et un terminal distant susceptibles de communiquer par visioconférence via le réseau Internet. Le terminal local possède un dispositif de rappel automatique selon l'invention pour augmenter ses chances d'obtenir une connexion avec le terminal distant.

Ce mode de réalisation est particulièrement avantageux lorsqu'un terminal localisé par exemple en France désire communiquer avec un terminal distant situé par exemple en Australie. En effet, le système de téléphonie sur le réseau Internet bénéficie d'un tarif plus avantageux pour les longues distances que celui proposé sur le réseau téléphonique commuté public classique.

Le schéma de la figure 6 représente le réseau Internet 100 reliant un utilisateur local, dit internaute 101, à un utilisateur distant, dit internaute 201. Pour mettre en oeuvre le procédé de rappel automatique décrit à la figure 2, appliqué à une visioconférence via le réseau Internet 100, chaque internaute 101, 201 dispose d'un équipement spécifique composé au minimum du matériel suivant :
- une unité centrale d'ordinateur 102, 202, munie d'une carte son 103, 203, pour numériser et restituer la parole,
- un moniteur de visualisation 104, 204,
- un clavier 105, 205 pour passer les commandes à l'unité centrale 102, 202,
- un microphone 106, 206,
- un haut-parleur/écouteur 107, 207,
- une caméra numérique 108, 208 pour filmer et ensuite transmettre l'image via le réseau 100,
- un modem 109, 209 pour véhiculer sur le réseau 100 les informations transmises à l'unité centrale 102, 202 par les périphériques 103 à 108, 2032 à 208.

L'unité centrale 102 est dotée d'un dispositif de rappel automatique selon l'invention, commandé depuis le clavier 105 après l'échec d'une tentative de connexion "manuelle" au terminal de l'internaute 201. Le dispositif comporte un processeur, une mémoire volatile pour stocker momentanément au moins le numéro de connexion (appelé couramment adresse Internet) de l'internaute 201, une mémoire non volatile pour stocker le programme principal de fonctionnement de l'ordinateur ainsi que les protocoles de communications des différents périphériques 103 à 109. Le processeur reconnait entre autres les protocoles de transfert de données via le modem 109. Les transferts de données utiles (dont la signalisation) sont effectués sur le réseau Internet via la ligne téléphonique en mode bi-directionnel simultané, de sorte que les internautes 101 e2t 201 puissent communiquer simultanément comme c'est le cas en téléphonie classique. Notamment, l'unité centrale 102 est capable de détecter la réception d'un message d'acquittement de connexion émis par le terminal distant et transmis à l'unité centrale 102 par le modem 109. Ici, la réception d'un acquittement de connexion correspond à la détection du décrochage de l'appelé en téléphonie classique. La détection du "décrochage" de l'appelé est en effet indispensable pour réaliser le procédé selon l'invention.

Ainsi, un terminal, un procédé de rappel automatique et un système de télécommunications ont été décrits à l'aide d'exemples pour fournir des moyens pour augmenter le taux de réussite des appels destinés à un terminal relié à un réseau de télécommunications. Bien entendu, l'invention n'est pas limitée aux modes de réalisations décrits, des variantes apparaîtront à l'homme ou la femme de l'art, sans sortir du cadre de l'invention.

## Revendications

1. **Terminal** local relié à un réseau de télécommunications pour communiquer en mode connecté bidirectionnel simultané avec au moins un terminal distant,
**caractérisé** en ce qu'il comporte un dispositif de rappel automatique intégré muni d'une commande locale destinée à être actionnée après l'échec d'une tentative de connexion au terminal distant, pour réitérer automatiquement la tentative.

2. Terminal selon la revendication 1, caractérisé en ce que le dispositif de rappel automatique est susceptible de réitérer automatiquement la tentative jusqu'à l'établissement d'une connexion dans la limite d'un nombre d'itérations prédéfini.

3. **Terminal** selon l'une des revendications 1 ou 2, les terminaux étant identifiés sur le réseau par un numéro de connexion,
**caractérisé** en ce que le dispositif de rappel automatique comporte :
- un moyen de stockage pour stocker au moins le numéro du terminal distant à rappeler,
- un moyen de recomposition automatique du numéro stocké, pour réitérer la tentative de connexion,
- un moyen de détection de l'établissement de ladite connexion,
- un moyen d'émission de signaux de connexion pour informer chaque terminal, si la connexion est détectée, de l'établissement de ladite connexion,
- un moyen d'émission d'un signal d'échec de connexion pour informer le terminal local en cas d'échec de ladite connexion.

4. **Terminal** selon l'une des revendications 1 à 3,
**caractérisé** en ce qu'il est mobile et relié par voie radio à un réseau de téléphonie mobile conforme à une recommandation du type ETS 300505, annexe A, janvier 1996.

5. **Terminal** selon l'une des revendications 1 à 3, le réseau étant un réseau téléphonique public à accès analogique,
**caractérisé** en ce que le moyen de détection de l'établissement de la connexion comporte un moyen de détection du décrochage du terminal distant basé sur une différenciation entre les signaux vocaux et les signaux de signalisation reçus par le terminal local.

6. **Procédé** de rappel automatique mis en oeuvre par un terminal local après l'échec d'une tentative de connexion à un terminal distant, les terminaux étant reliés à un réseau de télécommunications et identifiés respectivement par un numéro,
**caractérisé** en ce qu'il comporte les étapes suivantes :
- stockage du numéro du terminal distant,
- réalisation d'une boucle finie d'itération de ladite tentative de connexion vers le numéro stocké,
- détection d'un résultat positif si une connexion a pu être établie, négatif sinon,
- si le résultat est positif, transmission de signaux de connexion pour informer chaque terminal de l'établissement de la connexion,
- si le résultat est négatif, transmission d'un signal de résultat pour informer le terminal local de l'échec de la connexion.

7. **Procédé** de rappel automatique selon la revendication 6, mis en oeuvre par un terminal mobile relié à un réseau de téléphonie mobile conforme à une recommandation du type ETS 300 505, annexe A, janvier 1996.

8. **Procédé** de rappel automatique selon la revendication 6, mis en oeuvre dans terminal relié à un réseau téléphonique public à accès analogique,
**caractérisé** en ce que l'étape de détection du résultat des tentatives de connexion comprend la détection du décrochage du distant par différenciation entre les signaux vocaux et les signaux de signalisation reçus par le terminal local.

9. **Système** de télécommunications comportant au moins un terminal dit local et un terminal dit distant susceptibles de communiquer en mode connecté bi-directionnel simultané,
**caractérisé** en ce que le terminal local comporte, un dispositif de rappel automatique intégré muni d'une commande locale actionnée après l'échec d'une tentative de connexion au terminal distant.

10. Système de télécommunications selon la revendication 9, caractérisé en ce que le dispositif de rappel automatique est susceptible de réitérer automatiquement la tentative, jusqu'à l'établissement de la connexion dans la limite d'un nombre d'itérations prédéfini.

11. **Système** de télécommunications selon l'une des revendications 9 ou 10, conforme à une recommandation du type ETS 300505, annexe A, janvier 1996.

12. **Système** selon l'une des revendications 9 à 11, lesdits terminaux étant respectivement reliés à un réseau de télécommunications et identifiés par un numéro de connexion,
**caractérisé** en ce que le dispositif de rappel automatique comporte :
- un moyen de stockage pour stocker le numéro du terminal distant à rappeler,
- un moyen de recomposition automatique du numéro stocké, pour réitérer la tentative de connexion,
- un moyen de détection de l'établissement de ladite connexion.
- un moyen d'émission de signaux de connexion pour informer chaque terminal ainsi connecté de l'établissement de ladite connexion.
